Europäisches Patentamt

European Patent Office

Office européen des brevets

(11) Numéro de publication : **0 344 049 B1**

# (12) FASCICULE DE BREVET EUROPEEN

(45) Date de publication du fascicule du brevet :
25.03.92 Bulletin 92/13

(51) Int. Cl.⁵ : **B65B 21/02, B65G 47/91**

(21) Numéro de dépôt : **89401389.5**

(22) Date de dépôt : **22.05.89**

---

(54) **Outil de préhension et de manutention de bouteilles.**

---

(30) Priorité : **24.05.88 FR 8806857**

(43) Date de publication de la demande :
**29.11.89 Bulletin 89/48**

(45) Mention de la délivrance du brevet :
**25.03.92 Bulletin 92/13**

(84) Etats contractants désignés :
**AT BE CH DE ES FR GB GR IT LI LU NL SE**

(56) Documents cités :
**EP-A- 0 040 154**
**FR-A- 1 437 193**

(73) Titulaire : **G. M. THIERION S.A.**
**Zone Industrielle**
**F-51140 Muizon (FR)**

(72) Inventeur : **Thierion, Michel**
**Zone Industrielle**
**F-51140 Muizon (FR)**

(74) Mandataire : **Robert, Jean-Pierre et al**
**CABINET BOETTCHER 23, rue la Boétie**
**F-75008 Paris (FR)**

---

# Description

La présente invention concerne un outil de préhension et de manutention de bouteilles, principalement adapté à la mise en caisse de celles-ci, depuis un transporteur d'amenée de celles-ci sur lequel elles se présentent en file, debout, jusque dans le conteneur dans laquelle elles sont couchées par lit têtebêche.

On connaît de nombreux dispositifs pour réaliser cette manutention. La plupart d'entre-eux comportent un support pour une pluralité de ventouses alignées. Le support, dans un premier type d'appareil, est à orientation unique si bien que les ventouses sont tournées vers le bas, et prennent en charge des bouteilles qui ont été préalablement couchées. Dans un second type d'appareil le support de ventouses assure le couchage des bouteilles après les avoir prises en charge dans leur position debout. Ce couchage est réalisé par des moyens d'inclinaison du support de ventouses, qui commandent positivement le passage de l'une à l'autre des positions de ce support, ou qui commandent la mise en place du support pour la préhension de bouteilles verticales et qui contrôlent le couchage des bouteilles sous l'effet de la pesanteur. (Voir document FR-A-1 437 193)

Il faut, dans ce deuxième type d'apareil, développer un effort pour placer et maintenir l'outil de manutention dans sa position de prise en charge des bouteilles verticales. Cet effort est, dans les appareils mécanisés, développé par un organe moteur quelconque ou par une butée de maintien. Dans les appareils manuels c'est le manipulateur qui bascule le support de ventouses, et ce au détriment d'un bon guidage de ce support par rapport aux bouteilles verticales qu'il doit prendre en charge. L'invention entend proposer un outil dont l'équilibre est tel que, vide, sa position de repos soit habituellement celle dans laquelle les ventouses présentent leur face active verticalement et tel que, chargé, cet outil se place dans la position de manutention et de maintien des bouteilles couchées.

A cet effet, l'invention a donc pour objet un outil de préhension et de manutention de bouteilles, comportant un support allongé, attelé par son milieu à l'extrémité d'un organe de suspension et équipé d'une pluralité de ventouses alignées dont les ouvertures définissent la face active de l'outil. Selon l'invention, ce support étant attelé à l'organe de suspension au moyen d'une pièce d'articulation disposée tournante dans un palier du support dont l'axe est parallèle à la direction d'alignement des ventouses cet axe est distant du plan du support perpendiculaire à la face active, parallèle à la direction d'alignement des ventouses et qui contient le centre de gravité du support lorsqu'il est dépourvu de bouteilles.

Dans le cas où la face active de l'outil doit être strictement verticale, l'axe du palier est contenu dans un plan perpendiculaire au premier et passant par le centre de gravité.

Dans d'autres cas, cette condition peut ne pas être remplie. On peut alors, dans la position d'équilibre à vide de l'outil, avoir une face active inclinée d'un angle adapté à celui sous lequel se présentent les bouteilles si celles-ci sont, par exemple, dans des berceaux inclinés. Le réglage de cette pente et sa modification peuvent être assurés par un contrepoids à position réglable sur le support.

Il peut être avantageux que l'outil soit équipé de deux paliers d'articulation disposés de chaque côté du plan longitudinal susdit de manière qu'en position verticale de ce plan, instable à vide, on puisse aisément passer de l'un à l'autre palier ce qui déterminera la position verticale de la face active d'un côté ou de l'autre de l'organe de suspension.

Cet outil peut être attelé à l'organe de suspension de manière telle que par la commande de l'organe de suspension on peut monter, descendre et faire horizontalement tourner l'outil.

Dans une autre version, l'outil peut simplement être articulé à l'organe de suspension autour d'un axe vertical, à la manière d'un émerillon, et comporter des poignées de commande pour qu'un opérateur puisse à la main, commander son orientation horizontale à l'extrémité de l'organe de suspension, ainsi que l'extension ou la rétraction verticale de ce dernier. En général, l'organe de suspension est accroché dans ce type d'appareil à l'extrémité d'une potence tournante dont la rotation résulte de la manipulation de l'outil par l'opérateur.

L'invention sera mieux comprise au cours de la description d'un exemple de réalisation donné ci-après qui permettra d'en dégager les avantages et les caractéristiques secondaires.

Il sera fait référence aux dessins annexés dans lesquels :

- la figure 1 est une vue générale schématique d'un appareil de mise en caisse de bouteilles qui met en oeuvre un outil selon l'invention,
- les figures 2 et 3 sont des schémas illustrant les caractéristiques essentielles de l'invention,
- la figure 4 est une vue en coupe de l'outil selon la ligne IV-IV de la figure 5,
- la figure 5 est une vue en élévation de l'outil selon l'invention.

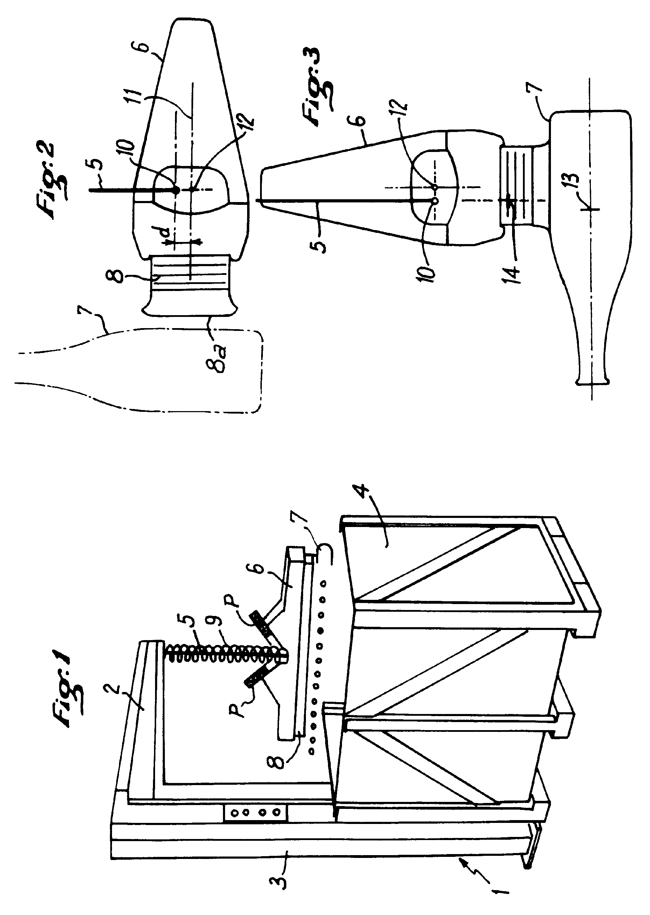

En se reportant tout d'abord à la figure 1 on voit une potence 1 comportant un bras supérieur 2 pivotant autour d'un montant vertical 3 de manière à pouvoir passer d'une zone où aboutit, par exemple, l'extrémité d'un transporteur, à une zone où se trouve une caisse 4 de conditionnement des bouteilles couchées.

Dans l'exemple représenté, la potence porte un organe 5 de suspension d'un outil 6 de préhension et de manipulation d'une série de bouteilles 7. Cet organe 5 est de préférence une sangle qui est attelée, dans la colonne de la potence, à un dispositif de contre-poids réglable (notamment au moyen d'un vérin pneumatique) pour équilibrer l'outil 6 à vide et chargé. Cet outil 6 de forme allongée, semblable à une poutre suspendue par son milieu, porte une pluralité de ventouses 8 alignées, dont les ouvertures définissent la face active de l'outil devant être appliquée sur les bouteilles 7 pour les maintenir par dépression. La dépression dans chaque ventouse est engendrée par tout moyen connu (pompe à vide ou aspirateur) logé dans le bâti de la potence et connecté au caisson à vide de l'outil qui communique avec chaque ventouse par un conduit souple 9 en serpentin autour de la sangle 5. L'outil 6 comporte enfin des poignées P de conduite par lesquelles l'opérateur peut l'élever ou l'abaisser par rapport à la flèche 2, l'orienter autour de la verticale de suspension, faire tourner la flèche 2, et modifier l'inclinaison de la face active de l'outil vide ou chargé.

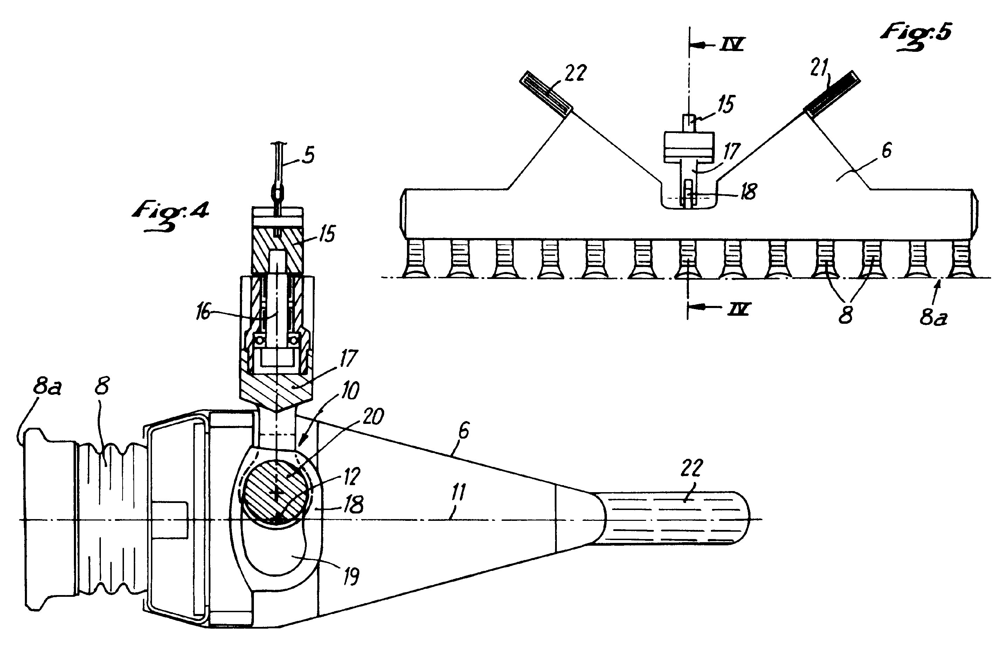

Les figures 2 et 3 sont deux schémas dans lesquels l'outil 6 est représenté vu de bout. A la figure 2, l'outil est en position propre à prendre en charge une ligne de bouteilles 7 debout, c'est-à-dire présentant l'ouverture des ventouses 8 (face active 8a) dans un plan vertical. Cette position est prise naturellement car, selon l'invention, l'attache 10 de la sangle 5 à l'outil 6, qui consiste, comme on le verra plus en détail en regard des figures 4 et 5, en une pièce d'articulation de l'outil d'axe parallèle à la face active 8a, est décalée par rapport au plan longitudinal 11 perpendiculaire à la face active 8a contenant le centre 12 de gravité de l'outil. Dans ces conditions, en l'absence de toute charge ou de toute contrainte extérieure, l'outil présente sa face 8a sensiblement verticalement. Elle sera verticale si la ligne 10-12 de la figure est perpendiculaire au plan 11. Si on préfère disposer d'une face active 8a inclinée sur la verticale, on aura la possibilité de déplacer le point d'attache 10 par rapport au centre de gravité 12, ou l'inverse par déplacement ou adjonction judicieuse d'une masse mobile sur l'outil. Le décalage d sera déterminé de manière que, lorsque l'outil a pris en charge la rangée de bouteilles 7 et que le barycentre 14 des centres de gravité 12 de l'outil et 13 de la bouteille 7 est à l'aplomb du point 10 d'accrochage de l'outil 6 à la sangle 5, la bouteille soit horizontale (horizontalité de la face active 8a). On comprend en effet que toutes choses égales par ailleurs, si cette distance d est trop importante, la bouteille sera levée du côté du col, l'inverse se produisant si cette distance d est trop faible.

On comprend qu'ainsi attaché à la sangle, l'outil retrouve au repos la position de la figure 2 ce qui évite à l'opérateur d'exercer un effort de basculement de l'outil 6 pour présenter les ventouses 8 en regard des bouteilles 7. Cet avantage est très important car il diminue les risques de mauvaise orientation relative entre outil et bouteilles, donc les risques de casse au cours de la manutention.

Sur les figures 4 et 5, qui comporte, avec les mêmes références, les éléments déjà écrits, on voit que la sangle 5 porte une pièce d'extrémité 15 dans laquelle une vis 16 est assujettie, cette vis 16 formant axe vertical de rotation d'une ferrure 17 en forme de chape. Une plaque 18, transversalement portée par l'outil 6, possède une ouverture 19 en arc de cercle dont le centre est situé à l'opposé des ventouses 8. Dans cette ouverture 19, l'axe 20 de la chape 17 peut prendre deux positions stables à chacune des extrémités de l'ouverture, ces extrémités formant deux paliers symétriques par rapport au plan 11 contenant le centre de gravité 12 de l'outil.

Ainsi, selon que l'axe 20 se trouve dans l'une ou l'autre de ces extrémités, les ventouses 8 seront orientées vers la gauche ou la droite de la figure 4 sans qu'il soit nécessaire de tourner l'outil autour de l'axe 16.

Cette caractéristique est avantageuse, car après avoir déposé un lit de bouteilles, il suffit d'une légère translation de l'outil, en position verticale par rapport à l'axe 20, pour modifier son orientation en position de repos et ainsi pouvoir coucher le lit de bouteilles suivant dans le sens inverse du précédent. On supprime ainsi la nécessité de faire tourner l'outil chargé de 180° autour de la vis 16 (au moins pour certaines phases du processus de chargement) en diminuant d'autant les risques d'accidents ou de casse qui sont attachés à ces mouvements amples.

Les ventouses mises en oeuvre dans cet outil peuvent être de tout type connu et notamment conforme au document FR 2 370 660.

On notera enfin que l'outil 6 est équipé de deux poignées de manoeuvre 21 et 22 situées de part et d'autre de la sangle 5 et inclinée en convergeant vers le point d'attache 10 de manière à offrir une manipulation de l'outil la plus facile possible.

L'invention couvre également une variante de réalisation non représentée dans laquelle l'outil 6 serait articulé non plus à une sangle mais à un étrier vertical rigide dont la montée, la descente, la rotation seraient commandées par moteurs et dans laquelle un mécanisme commandé permettrait le passage de l'axe 20 de l'une à l'autre des extrémités de la lumière 19.

**Revendications**

1. Outil de préhension et de manutention de bouteilles comportant un support (6) allongé, attelé par son milieu à l'extrémité d'un organe (5) de suspension et équipé d'une pluralité de ventouses (8) alignées dont les ouvertures définissent la face active (8a) de l'outil le support (6) étant attelé à l'organe de suspension (5) au moyen d'une pièce d'articulation (17, 20) disposée tournante dans un palier (18) du support dont l'axe est parallèle à la direction d'alignement des ventouses (8), caractérisé en ce que cet axe est distant (d) du plan (11) du support perpendiculaire à la face active (8a), parallèle à la direction d'alignement des ventouses (8), et qui contient le centre de gravité (12) du support dépourvu de bouteilles.

2. Outil selon la revendication 1, caractérisé en ce que l'axe du palier est contenu dans un plan perpendiculaire au premier (11) et passant par le centre de gravité (12).

3. Outil selon la revendication 2 caractérisé en ce qu'il comporte deux paliers symétriques l'un de l'autre par rapport au plan longitudinal (11) susdit, formés par les extrémités d'une lumière (19) oblongue de largeur égale au diamètre de la pièce d'articulation (20).

4. Outil selon la revendication 3 caractérisé en ce que la lumière (19) est en arc de cercle dont le centre est situé à l'opposé de la face active (8a) par rapport à la lumière.

5. Outil selon l'une quelconque des revendications précédentes caractérisé en ce que la pièce d'articulation (17, 20) est montée tournante à la manière d'un émérillon à l'extrémité de l'organe de suspension (5).

6. Outil selon la revendication 5 caractérisé en ce qu'il comporte au moins une poignée de manoeuvre (21, 22) à l'opposé de la face (8a) active et de chaque côté de l'organe de suspension (5).

7. Outil selon l'une quelconque des revendications précédentes caractérisé en ce que la pièce d'articulation est une chape (17) chevauchant une plaque (18) du support (6) transversale à la direction d'alignement des ventouses (8) et comportant chacun des paliers susdits.

## Patentansprüche

1. Werkzeug zum Aufnehmen und Handhaben von Flaschen, umfassend einen länglichen Halter (6), welcher in seiner Mitte am Ende eines Aufhängeorgans (5) befestigt und mit mehreren aufgereihten Saugnäpfen (8) versehen ist, deren Saugöffnungen die aktive Seite (8a) des Werkzeuges bilden, wobei der Halter (6) am Aufhängeorgan (5) mittels eines Schwenkaufhängestückes (17, 20) befestigt ist, das drehbar in einem Haltelager (18) gehalten wird, dessen Achse parallel zur Richtung der Reihe der Saugnäpfe (8) ist, dadurch **gekennzeichnet,** daß diese Achse einen Abstand (d) von der Ebene (11) des Halters hat, die rechtwinklig zur aktiven, parallel zur Richtung der Aufreihung der Saugnäpfe (8) angeordneten Seite (8a) liegt, und die den Schwerpunkt (12) des von allen Flaschen befreiten Halters enthält.

2. Werkzeug nach Anspruch 1, dadurch **gekennzeichnet,** daß die Achse des Lagers in einer Ebene liegt, die rechtwinklig zur erstgenannten Ebene (11) liegt und durch den Schwerpunkt (12) verläuft.

3. Werkzeug nach Anspruch 2, dadurch **gekenn-**

**zeichnet,** daß es zwei bezüglich der genannten Längsebene (11) zueinander symmetrische Lager hat, die durch die Enden einer länglichen Ausnehmung (19) gebildet sind, deren Breite dem Durchmesser des Schwenkaufhängestückes (20) entspricht.

4. Werkzeug nach Anspruch 3, dadurch **gekennzeichnet,** daß die Ausnehmung (19) als Kreisbogen ausgebildet ist, dessen Mittelpunkt mit Bezug auf die Ausnehmung der aktiven Seite (8a) abgewandt ist.

5. Werkzeug nach einem der vorangehenden Ansprüche, dadurch **gekennzeichnet,** daß das Schwenkaufhängestück (17, 20) nach Art eines Wirbels drehbar am Ende des Aufhängeorgans (5) angeordnet ist.

6. Werkzeug nach Anspruch 5, dadurch **gekennzeichnet,** daß es wenigstens einen von der aktiven Seite (8a) abgewandten und jeweils an einer Seite des Aufhängeorgans (5) angeordneten Betätigungsgriff hat.

7. Werkzeug nach einem der vorangehenden Ansprüche, dadurch **gekennzeichnet,** daß das Schwenkaufhängestück ein Bügel (17) ist, welcher eine Platte (18) des Halters (6) übergreift, die quer zur Richtung der Aufreihung der Saugnäpfe (8) steht, und welcher die genannten Lager aufweist.

## Claims

1. A tool for grasping and handling bottles, the tool comprising an elongate support (6) coupled in the middle to one end of a suspension member (5) and fitted with a plurality of suction cups (8) in alignment with the openings of the suction cups defining an active face (8a) of the tool, the support (6) being coupled to the suspension member (5) by means of a hinge piece (17, 20) rotatably received in a bearing (18) of the support with the axis of the hinge piece running parallel to the direction in which the suction cups (8) are in alignment, characterized in that sand axis is at a distance (d) from the plane (11) of the support extending perpendicularly to the active face (8a) and parallel to the direction in which the suction cups (8) are in alignment and containing the center of gravity (12) of the tool when unloaded.

2. A tool according to claim 1, characterized in that the axis of the bearing lies in a plane perpendicular to the said longitudinal plane (11) and passing through the center of gravity (12) of the tool.

3. A tool according to claim 2, characterized in that it includes two bearings disposed symmetrically to each other akut the said longitudinal plane (11) and constituted by the end of an oblong opening (19) whose width is equal to the diameter of the hinge piece (20).

4. A tool according to claim 3, characterized in that the opening (19) is in the shape of an arc of a circle with the center of the circle being on one side of the opening and with the active face (8a) being on the opposite side thereof.

5. A tool according to any preceding claim, characterized in that the hinge piece (17, 20) is swivel-mounted at the end of the suspension member (5).

6. A tool according to claim 5, characterized in that it includes at least one operating handle (21, 22) on each side of the suspension member (5) and on the opposite side of the tool to the active face (8a) thereof.

7. A tool according to any preceding claim, characterized in that the hinge piece is consituted by the pin of a clevis (17), said clevis being placed astride a plate (18) on the support (6), said plate extending transversely to the direction in which the suction cups (8) are in alignment, and including the said bearing, or each of them.

Fig.2

Fig.3

Fig.1

Fig.5

Fig.4